# DEMANDE DE BREVET EUROPEEN

(11) **EP 4 491 912 A1**
(43) Date de publication de la demande: **15.01.2025**
(21) Numéro de dépôt: 24184023.0
(22) Date de dépôt: 24.06.2024
(51) Int. Cl.: F16H 63/34, F16H 61/36

(54) **DISPOSITIF DE DÉVERROUILLAGE D'URGENCE DE STATIONNEMENT POUR UNE TRANSMISSION AUTOMATIQUE**

(30) Priorité: 03.07.2023 FR 2307074
(71) Demandeur: Renault s.a.s, 92100 Boulogne Billancourt (FR)
(72) Inventeur: BANU, Sorin, 062203 BUCAREST (RO); PREDA, Alexandru, 062203 BUCAREST (RO); TURUNC, Irfan, 16372 BURSA (TR)

(57) **Abrégé**

Dispositif de déverrouillage d'urgence de stationnement (1) pour une transmission automatique, comportant :
- Un levier de vitesses (40) mobile entre une position de verrouillage d'une boîte à vitesses en position de stationnement et une position de déverrouillage de la boîte à vitesses,
- Un mécanisme d'actionnement (10) apte à être actionné manuellement par un utilisateur afin de déplacer le levier de vitesses (40) depuis sa position de verrouillage vers sa position de déverrouillage, le mécanisme d'actionnement (10) comportant à l'une de ces extrémités distales une pièce de désengagement (14) comportant sur sa face (15) en regard du levier une portion arrondie convexe vers l'extérieur (16), ladite portion arrondie (16) étant agencée pour venir au moins partiellement en contact dudit levier de vitesses (40) lorsque ledit mécanisme (10) est actionné, entraînant le déplacement dudit levier (40) de sa position de verrouillage vers la position de déverrouillage.

## Description

### Domaine technique

La présente invention a trait au domaine des boîtes à vitesses automatiques équipant les véhicules automobiles.

L'invention concerne plus spécifiquement un mécanisme de déverrouillage d'urgence pour une transmission automatique.

### Arrière-plan technologique

Il est connu d'équiper un véhicule d'un système de transmission automatique. Un tel système comporte quatre positions de conduite à savoir : de stationnement (P), de marche arrière (R), de point mort (N) et de conduite (D).

La plupart des systèmes de transmission automatique sont équipés d'un dispositif de verrouillage pour verrouiller la boîte à vitesses dans la position de stationnement quand cela est nécessaire. Ce dispositif de verrouillage est conçu pour empêcher un déplacement accidentel du véhicule.

Dans certaines situations, notamment lors d'une coupure d'énergie ou lorsque le système de verrouillage est défaillant, il peut être impossible de déplacer la boîte à vitesses automatique de la position de stationnement vers une autre position.

Pour cela, les systèmes de transmission automatiques sont pourvus d'un mécanisme de déverrouillage d'urgence pour permettre le déblocage manuel de la boîte à vitesses lorsque celle-ci est en position de stationnement.

Le mécanisme comporte de manière générale un câble de commande qui est actionnable manuellement par un utilisateur pour permettre le désengagement de la position de stationnement.

Un tel mécanisme est notamment décrit dans la demande EP2527692B1.

Il existe un besoin pour améliorer davantage les mécanismes de déverrouillage d'urgence de stationnement pour les transmissions automatiques.

### Résumé de l'invention

L'invention a pour objet un dispositif de déverrouillage d'urgence de stationnement pour une transmission automatique, comportant :
- Un levier de vitesses mobile entre une position de verrouillage d'une boîte à vitesses en position de stationnement et une position de déverrouillage de la boîte à vitesses,
- Un mécanisme d'actionnement apte à être actionné manuellement par un utilisateur afin de déplacer le levier de vitesses depuis sa position de verrouillage vers sa position de déverrouillage, le mécanisme d'actionnement comportant à l'une de ces extrémités distales une pièce de désengagement comportant sur sa face en regard du levier une portion arrondie convexe vers l'extérieur, ladite portion arrondie étant agencée pour venir au moins partiellement en contact dudit levier de vitesses lorsque ledit mécanisme est actionné, entraînant le déplacement dudit levier de sa position de verrouillage vers la position de déverrouillage.

La forme arrondie de la face de la pièce de désengagement en regard du levier permet un contact sensiblement ponctuel avec levier de vitesses. Ce contact ponctuel permet le pivotement du levier autour de son axe de rotation lors du déplacement de la pièce de désengagement.

L'utilisation d'une pièce de désengagement avec une face arrondie convexe vers l'extérieur permet de faciliter la conception du dispositif de déverrouillage d'urgence et sa fabrication. En effet, contrairement aux dispositifs de l'art antérieur, le contact ponctuel ne nécessite pas de réaliser les pièces de désengagement et leviers de vitesses avec des formes complexes.

De préférence, le levier de vitesses présente sur sa portion venant en contact de la pièce d'engagement une surface extérieure lisse dépourvue de reliefs en saillie.

De préférence, le levier est mobile en rotation autour d'un axe de rotation entre sa position de verrouillage et sa position de déverrouillage.

La pièce de désengagement peut être de contour, en vue de face, de forme générale circulaire. De préférence, la pièce de désengagement est en forme de disque.

En variante, la pièce de désengagement est de contour, en vue de face, de forme générale polygonale, et par exemple hexagonale.

De préférence, la portion arrondie s'étend sur au moins une partie centrale de la face précitée.

De préférence, la portion arrondie convexe vers l'extérieur est en forme de calotte, notamment sensiblement sphérique.

La portion arrondie peut occuper au moins 10% de la face précitée, mieux au moins 30%, encore mieux au moins 50%, notamment au moins 70%. De préférence, la portion arrondie s'étend sensiblement sur toute la face précitée.

La portion arrondie peut être d'enveloppe de forme symétrique de révolution.

Ainsi la portion arrondie peut présenter, en vue de côté, un profil en forme d'arc de cercle ou d'ellipse, de même qu'en section longitudinale.

De préférence, le contour en section longitudinale de la portion présente un rayon de courbure constant.

Le mécanisme d'actionnement peut comporter un actionneur sur lequel agit l'utilisateur et une liaison filaire agencée pour relier la pièce de désengagement à l'actionneur, de telle manière qu'un mouvement de l'actionneur entraîne un déplacement de ladite pièce de désengagement d'une position initiale de non-contact avec le levier vers une position de contact avec ledit levier.

La pièce de désengagement peut être apte à se déplacer selon une translation linéaire.

L'actionneur est de préférence mobile en rotation selon un premier sens, ledit mécanisme étant agencé de telle manière qu'une rotation de l'actionneur selon le premier sens entraîne le déplacement de la pièce de désengagement de sa position initiale vers sa position de contact avec le levier, de préférence selon une translation linéaire. En particulier, le mécanisme d'actionnement est agencé pour que lorsque l'actionneur est tourné selon le premier sens, une force de traction est exercée sur la pièce de désengagement via la liaison filaire l'amenant de sa position initiale à sa position de contact avec le levier. De préférence, le contact de la pièce de désengagement avec le levier engendre le pivotement dudit levier de sa position de verrouillage vers sa position de déverrouillage.

L'actionneur peut comporter un organe rotatif, notamment creux, tel qu'un écrou.

L'actionneur peut comporter en outre une tige creuse agencée de manière à traverser l'organe rotatif creux et pour pouvoir se déplacer verticalement vers l'extérieur du mécanisme, notamment selon un mouvement de translation, lors de la rotation de l'organe rotatif selon le premier sens.

La liaison filaire peut comporter un câble de commande ayant une extrémité libre élargie logée au sein de ladite tige creuse et venant en appui d'une paroi interne de ladite tige.

Grâce à la forme élargie de l'extrémité du câble de commande, celle-ci vient en butée contre le fond de la tige lorsque la tige se déplace verticalement vers l'extérieur. Aussi, le déplacement précité engendre une traction sur le câble de commande selon le même sens et même direction.

Avantageusement, le mécanisme comporte en outre une tige de transmission reliant la liaison filaire, notamment le câble de commande, à la pièce de désengagement.

La pièce de désengagement peut comporter à cet effet une ou plusieurs ouvertures pour le passage de ladite tige de transmission.

De préférence, le câble de commande est fixé à la tige de transmission par une extrémité distale opposée à son extrémité proximale élargie.

De préférence, la liaison filaire comporte un manchon logeant le câble de commande.

De préférence, le mécanisme d'actionnement comporte en outre des moyens de rappel de la pièce d'engagement dans sa position initiale de non-contact. Les moyens de rappel peuvent être logés à l'intérieur du manchon précité.

De préférence, les moyens de rappel sont en position de repos lorsque la pièce de désengagement est à sa position de non-contact avec le levier de vitesses.

De préférence, les moyens de rappel sont agencés de manière à ce que le déplacement de la pièce de désengagement vers sa position de contact avec le levier entraîne la compression des moyens de rappel.

De préférence, le mécanisme d'actionnement est en outre apte à être actionné manuellement par l'utilisateur afin de déplacer le levier de vitesses depuis sa position de déverrouillage vers sa position de verrouillage.

L'actionneur est de préférence mobile en rotation selon un deuxième sens opposé au premier sens, ledit mécanisme étant agencé de telle manière qu'une rotation de l'actionneur selon le deuxième sens entraîne le déplacement de la pièce de désengagement de sa position de contact vers sa position de non-contact avec le levier de vitesses. Le retour de la pièce de désengagement dans sa position initiale de non-contact libère le levier entraînant ainsi son pivotement de sa position de déverrouillage vers sa position de verrouillage.

De préférence, le mécanisme est configuré pour que lorsque l'actionneur est tourné selon le deuxième sens, la pièce de désengagement n'est plus soumise à une force de traction, et que cette pièce de désengagement retrouve sa position initiale sous l'effet des moyens de rappel.

L'invention a encore pour objet un véhicule comportant un dispositif de déverrouillage d'urgence de stationnement selon l'invention.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente schématiquement un dispositif de déverrouillage d'urgence selon l'invention ;
[fig. 2] La figure 2 représente en perspective un premier détail de la figure 1 ;
[fig. 3] La figure 3 est une vue similaire à la figure 2 après activation du dispositif ;
[fig. 4] et [fig. 5] Les figures 4 et 5 représentent respectivement une coupe longitudinale des figures 2 et 3 ;
[fig. 6] La figure 6 représente en coupe longitudinal un deuxième détail de la figure 1 ; et
[fig. 7] La figure 7 illustre le déplacement du levier de vitesses.

### Description de mode(s) de réalisation

Dans les figures, et à moins qu'il n'en soit disposé autrement, les éléments identiques porteront les mêmes signes de référence.

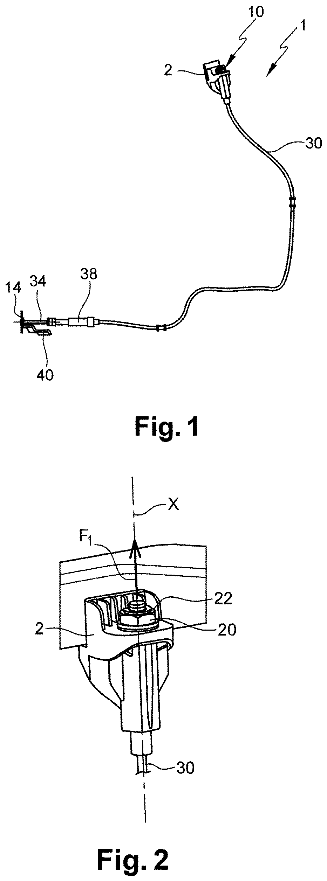

On a représenté à la figure 1 un exemple de dispositif de déverrouillage d'urgence de stationnement pour une transmission automatique selon l'invention.

Comme illustré, le dispositif 1 comporte un support 2 pour la fixation du dispositif dans un véhicule.

Le dispositif comporte un levier de vitesses 40 mobile en rotation entre une position de de verrouillage de la boîte à vitesses en position de stationnement et une position de déverrouillage de la boîte à vitesses.

Le dispositif 1 comporte en outre un mécanisme d'actionnement 10 apte à être actionné manuellement par un utilisateur afin de déplacer le levier de vitesses 30 depuis sa position de verrouillage vers sa position de déverrouillage.

Comme illustré, le mécanisme d'actionnement 10 comporte à l'une de ces extrémités distales une pièce de désengagement 14 qui est en forme d'un disque dans l'exemple illustré. La pièce de désengagement 14 est agencée pour venir en contact dudit levier de commande lorsque ledit mécanisme est actionné, entraînant ainsi le pivotement du levier vers la position de déverrouillage.

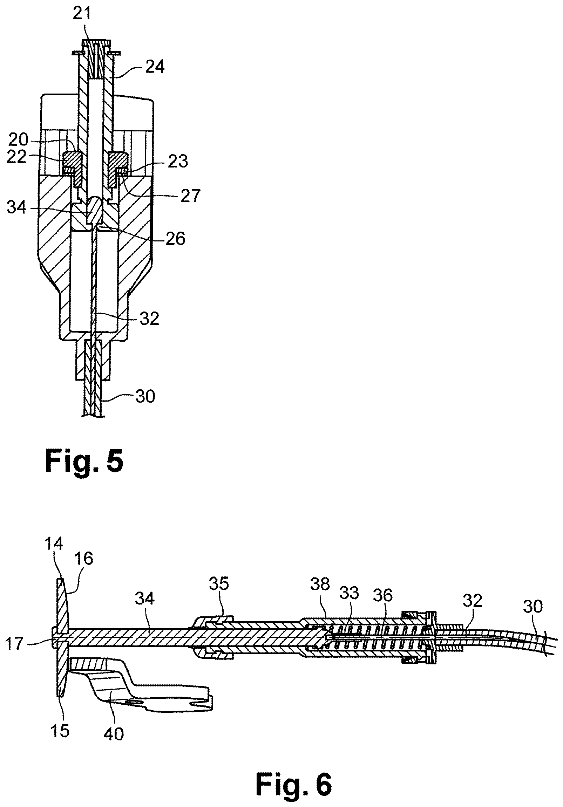

Comme illustré aux figures 5 et 6, la pièce de désengagement 18 présente une face 15 en regard du levier de vitesses 40. Cette face 15 comporte une portion 16 arrondie convexe vers l'extérieur. La portion arrondie 16 présente, en vue de côté, un profil en forme d'arc de cercle de même qu'en section longitudinale. Le contour en section longitudinale de la portion présente un rayon de courbure constant.

Le mécanisme d'actionnement 10 comporte un actionneur 20 reçu dans le support 2 sur lequel agit l'utilisateur et une liaison filaire 30 agencée pour relier la pièce de désengagement 14 à l'actionneur 20, de telle manière qu'un mouvement de l'actionneur 20 entraîne un déplacement de ladite pièce de désengagement.

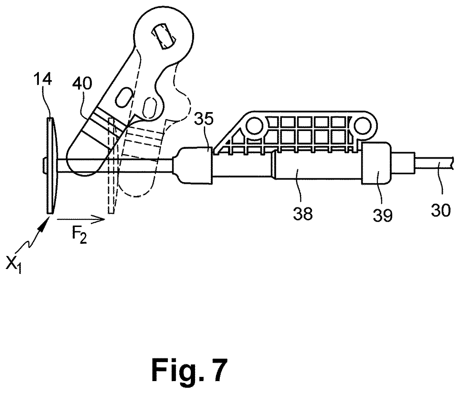

Comme illustré notamment aux figures 6 et 7, la liaison filaire 30 comporte un câble de commande 32 relié par une extrémité distale 33 à la pièce de désengagement par l'intermédiaire d'une tige de transmission 34. A cet effet, la pièce de désengagement 14 présente une ouverture 17 pour le passage de la tige de transmission 34.

Dans l'exemple illustré aux figures 2 à 6, l'actionneur 20 comporte un écrou rotatif 22 couplé à une tige creuse 24. La tige creuse 274 est mobile en translation selon un axe vertical X. La tige creuse 24 est agencée de manière à pouvoir se déplacer verticalement vers l'extérieur du mécanisme, selon la flèche F1, lors de la rotation de l'écrou 22 selon un premier sens par exemple dans le sens horaire, comme cela est visible aux figures 2 ,3 et 5.

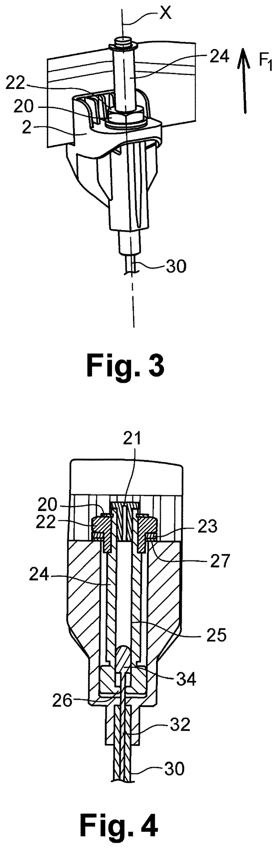

Comme illustré aux figures 4 et 5, le câble de commande 32 présente une extrémité proximale 34 élargie logée à l'intérieur de la tige creuse 24 et venant au contact d'une paroi interne 25 de ladite tige creuse 24. L'extrémité élargie 34 permet d'empêcher le câble de commande 32 de glisser en dehors de la tige creuse 24. Aussi, lors du déplacement de la tige creuse 24 verticalement vers l'extérieur, c'est-à-dire selon la flèche F1, l'extrémité élargie 34 du câble de commande 32 bute sur le col 26 de la tige creuse 24, comme illustré notamment à la figure 5. Par conséquent, lors du déplacement vertical précité, le câble de commande 32 est soumis à une force de traction dans le même sens, entraînant ainsi le déplacement de la pièce de désengagement 14 d'une position initiale X1 de non-contact avec le levier vers une position de contact avec ledit levier selon la flèche F2, comme illustré à la figure 7. Le contact entre la pièce de désengagement 14 et le levier 20 entraine le pivotement du levier 40 de sa position de verrouillage vers sa position de déverrouillage libérant ainsi la boîte à vitesses.

L'actionneur 20 est également rotatif selon un deuxième sens opposé au premier, par exemple contraire au sens antihoraire, lorsque le levier est à sa position de déverrouillage. Lorsque l'écrou 33 est tourné selon le deuxième sens, la tige creuse 24 de déplace verticalement vers l'intérieur du mécanisme 10 pour retrouver sa position initiale X1. Aussi, le câble n'est plus soumis à la traction précitée. La pièce de désengagement 14 est ainsi libérée et retrouve sa position initiale c'est-à-dire de non-contact avec le levier grâce à un ressort 36 fixé à la tige de transmission. Le ressort 36 est reçu dans un manchon 38 recevant en outre une portion du câble de commande 32, comme illustré.

Le dispositif comporte en outre des pièces d'étanchéité 21, 23, 27, 35 et 36 assurant l'étanchéité de l'ensemble.

Nous allons par la suite décrire l'utilisation du dispositif de déverrouillage d'urgence de stationnement selon l'invention.

Afin d'activer le dispositif 1, l'utilisateur agit dans un premier temps sur l'actionneur 10 en tournant l'écrou dans le premier sens, par exemple dans le sens horaire, comme illustré à la figure 4. La tige creuse 24 se déplace ainsi vers l'extérieur selon la flèche F1 et exerce une traction sur le câble de commande 32.

De l'autre côté, le câble de commande 32 soumis à la traction tire sur la tige de liaison 34 et comprime le ressort de rappel 36. La pièce de désengagement 14 est ainsi déplacée en direction du levier de vitesses, selon la flèche F2 et amenée à sa position de contact avec le levier de vitesses 40. Le contact avec le levier 40 lors du déplacement de la pièce de désengagement 14 entraîne le pivotement du levier 40 jusqu'en fin de course pour déverrouiller la boîte de vitesses.

Afin de désactiver le dispositif 1, l'utilisateur agît de nouveau sur l'actionneur en tournant l'écrou dans le deuxième sens, c'est-à-dire le sens antihoraire. La tige creuse 24 se déplace verticalement vers le bas t retrouve ainsi sa position initiale. Le câble de commande 32 cesse d'être soumis à la force de traction et libère ainsi le ressort de rappel 36. Ce dernier, en retrouvant sa position de repos, exerce une poussée sur la tige de transmission 34 ce qui ramène la pièce de désengagement 14 à sa position initiale X1 de non-contact avec le levier et libère ainsi ce dernier. Le levier 40 ainsi libéré retrouve sa position de verrouillage de la boîte à vitesses.

L'invention n'est pas limitée à l'exemple qui vient d'être décrit.

## Revendications

1. Dispositif de déverrouillage d'urgence de stationnement (1) pour une transmission automatique, comportant :
- Un levier de vitesses (40) mobile entre une position de verrouillage d'une boîte à vitesses en position de stationnement et une position de déverrouillage de la boîte à vitesses,
- Un mécanisme d'actionnement (10) apte à être actionné manuellement par un utilisateur afin de déplacer le levier de vitesses (40) depuis sa position de verrouillage vers sa position de déverrouillage, le mécanisme d'actionnement (10) comportant à l'une de ces extrémités distales une pièce de désengagement (14) comportant sur sa face (15) en regard du levier une portion arrondie convexe vers l'extérieur (16), ladite portion arrondie (16) étant agencée pour venir au moins partiellement en contact dudit levier de vitesses (40) lorsque ledit mécanisme (10) est actionné, entraînant le déplacement dudit levier (40) de sa position de verrouillage vers la position de déverrouillage.

2. Dispositif selon la revendication précédente, le levier de vitesses (40) étant mobile en rotation autour d'un axe de rotation entre sa position de verrouillage et sa position de déverrouillage .

3. Dispositif selon l'une quelconque des revendications précédentes, la pièce de désengagement (14) étant de contour, en vue de face, de forme générale circulaire, la portion arrondie (16) s'étendant sur au moins une partie centrale de la face correspondante (15).

4. Dispositif selon l'une quelconque des revendications précédentes, la portion arrondie convexe vers l'extérieur (16) étant en forme de calotte, notamment sensiblement sphérique.

5. Dispositif selon l'une quelconque des revendications précédentes, le levier de vitesses (40) présentant sur sa portion venant en contact de la pièce d'engagement une surface extérieure lisse dépourvue de reliefs en saillie.

6. Dispositif selon l'une quelconque des revendications précédentes, le mécanisme d'actionnement (10) comportant un actionneur (20) sur lequel agit l'utilisateur et une liaison filaire (30) agencée pour relier la pièce de désengagement (14) à l'actionneur (10), de telle manière qu'un mouvement de l'actionneur (10) entraîne un déplacement de ladite pièce de désengagement (14) d'une position initiale (X1) de non-contact avec le levier vers une position de contact (X2) avec ledit levier (40).

7. Dispositif selon l'une quelconque des revendications précédentes, le mécanisme d'actionnement (10) comportant en outre des moyens de rappel (36) de la pièce d'engagement (14) dans sa position initiale de non-contact (X1), les moyens de rappel (36) étant de préférence en position de repos lorsque la pièce de désengagement (14) est à sa position de non-contact (X1) avec le levier de vitesses (40).

8. Dispositif selon l'une quelconque des revendications 6 et 7, le mécanisme d'actionnement (10) étant en outre apte à être actionné manuellement par l'utilisateur afin de déplacer le levier de vitesses (40) depuis sa position de déverrouillage vers sa position de verrouillage.

9. Dispositif selon la revendication précédente, l'actionneur (20) étant mobile en rotation selon un deuxième sens opposé au premier sens, ledit mécanisme étant agencé de telle manière qu'une rotation de l'actionneur (20) selon le deuxième sens entraîne le déplacement de la pièce de désengagement (18) de sa position de contact vers sa position de non-contact avec le levier de vitesses.

10. Véhicule comportant un dispositif de déverrouillage d'urgence de stationnement (1) selon l'une quelconque des revendications précédentes.
